# EUROPEAN PATENT SPECIFICATION

(11) **EP 0 477 032 B1**
(45) Date of publication and mention of the grant of the patent: **21.06.1995**
(21) Application number: 91308616.1
(22) Date of filing: 20.09.1991
(51) Int. Cl.: B60P 7/15

(54) **Cargo support beams**
Stützbalken für die Ladung
Bras-support pour la cargaison

(30) Priority: 21.09.1990 GB 9020599; 21.09.1990 GB 9020598
(43) Date of publication of application: 25.03.1992
(73) Proprietor: SHORFAST LIMITED, Basildon, Essex, SS14 3JY (GB)
(72) Inventor: Venton-Walters, Roy, c/o Shorfast Limited, Chester CH1 3EL (GB)
(74) Representative: Allman, Peter John

(56) References cited:
- US-A- 4 079 677
- US-A- 4 473 331
- US-A- 4 502 619
- US-A- 4 781 499

## Description

This invention relates to cargo support beams intended for use as part of a system for the transportation of cargo in rigid sided box-vans, trucks or other vehicles or containers (hereinafter and in the claims, for convenience, referred to as "vehicles"), especially to cargo support beams of the type described in the preamble of claim 1.

In known systems a number of beams span the width of the vehicle and are attached at each end at or near to the inner side walls by suitable fitments or supporting structure. The beams can be used to hang garments therefrom, usually by means of coat-hangers or the like. In addition the beams can be used as a "second deck" system whereby a temporary deck is positioned on the beams to provide for a second deck carrying capacity in addition to that at floor level.

Known systems have end fitments and sliding shoes attached to the beam. The sliding shoe is mounted captively to a vertical track attached to the vehicle wall and is slidable relative to the track. This arrangement allows the beam to be vertically displaced along the track. The end fitments are often mounted pivotally to their respective beam and may have a telescoping arrangement which allows the effective length of the beam to be increased. The telescopic arrangement reduces the possibility of accidental jamming during the vertical positioning of the beam and allows any beam to be slid to its required height one end at a time by displacing the beam through a temporary position where it is at a diagonal to the vertical tracks.

The above system has several disadvantages. The telescopic action causes a significant increase in the required vehicle or container side strength in order to cope with side loads. The telescopic action which is effected when side loads are applied prevents both side walls of the vehicle from sharing the side load. In the case where the second deck has a high loading this might result in a severe increase in the cost of the system and in the weight of the vehicle. Furthermore, it is often necessary to change the type of beam in the vehicle which entails the removal of the beam complete with the end fittings and sliding shoes. A different beam is re-fitted together with its own end fittings and sliding shoes. The sliding shoes and end fittings constitute a significant part of the weight and the cost of each beam assembly and their removal generally requires the use of particular tools. Hence the cost and complexity of the beam change operation is undesirably high.

US 4473331 describes a cargo shoring device. Each end of the body of the device has a foot portion which is designed to fictionally engage the wall of the vehicle. Each foot portion is extensibly connected to the body by means of a rack and pinion arrangement. By manipulating a lever attached to the pinion a foot portion can be extended towards the vehicle wall. The device is designed merely to shore cargo and is not designed to support loads from above e.g. second decks. Furthermore, the device is not adapted for use with a guide track/sliding shoe arrangement.

It is an object of the present invention to provide for a beam having a telescoping arrangement which retains its tensile integrity when side loads are applied.

It is also an object of the present invention to provide a sliding shoe and end fitting common to a range of beams which can be rapidly detached from or attached to a vehicle without the need for tools.

In accordance with the present invention there is provided an elongate cargo support beam for use in conjunction with a guide track, the beam, comprising a first member and a second member, said second member being axially moveable relative to said first member to provide a telescopic action, the second member being moveable relative to said first member in a substantially vertical direction between a first position in which the first and second members are engaged to prevent said telescopic action and a second position in which said first and second members are disengaged to permit said telescopic action, characterized in that there is provided at an end of the second member a connector adapted for connection to a sliding shoe captively engaged to the guide track whereby movement of said beam along the track causes the beam to move telescopically automatically.

Preferably said first member is of a hollow box section configuration.

Preferably said second member is received in said hollow in said first member.

Preferably there is provided biasing means to bias said first and second members into said second position.

Preferably said second member is pivotable about one end within said first member.

Preferably said first and second members are engaged locking plates defined on each of said first and second members each locking plate being of corrugated or toothed configuration having a series of peaks and troughs which engage with the peaks and troughs formed on the other locking plate.

Preferably said locking plates have protruding elements which locate into apertures provided in their respective members on which they are mounted.

Preferably said protruding elements are designed to withstand shear forces applied axially to the beam.

Alternatively the first and second members are engaged by a pin on one of the members which engages in one of a series of apertures defined in the corresponding member.

Preferably said pin is biased into engagement with said aperture.

Preferably said second member is connected to said first member by means of a webbing strap to limit the telescopic action of the second member out from the first member.

Preferably there is provided a limit stop to limit the telescopic action of the second member into the first member.

Preferably the cargo support beam has a rail of curved configuration from which garment hangers can be suspended.

In an alternative preferred embodiment said second member is of hollow configuration and said first member is received in said hollow.

Preferably said second member is of a cradle configuration in which an end of said first member is seated.

Preferably said first member has a slot provided therein in which a pin defined in said cradle is received such that axial movement of said pin relative to said slot provides for said telescopic action and said pivotal motion.

In accordance with a second aspect of the present invention there is provided a cargo support beam releasably connected to a sliding shoe said shoe being slidable relative to a track fitted in said vehicle characterised in that said beam has a hooked member which is adapted to abut said shoe when removal is attempted with the shoe fitted to the track and which is adapted to allow removal of the beam when the shoe is dislocated from the track and rotated through a suitable angle.

Preferably the hooked member has a lip which abuts a face of said shoe when the beam is moved axially to attempt to separate the beam from the shoe.

Specific embodiments of the present invention will now be described, by way of example, with reference to the accompanying drawings in which:
Figure 1 is a plan view of a cargo support beam according to the present invention;
Figure 2 is a part cut away side view of Figure 1 showing locking plates engaged and including a sliding shoe on a vertical track;
Figure 3 is an end view of Figure 1;
Figure 4 is a part cut away side view of Figure 1 showing locking plates disengaged;
Figure 5 is a part cut away side view of an alternative embodiment of a cargo support beam in accordance with the present invention;
Figure 6 is an end view of Figure 5;
Figure 7 is a schematic side view of a further embodiment of the cargo support rail; and
Figure 8 is a scrap view showing an end of the cargo support beam separated from a sliding shoe.

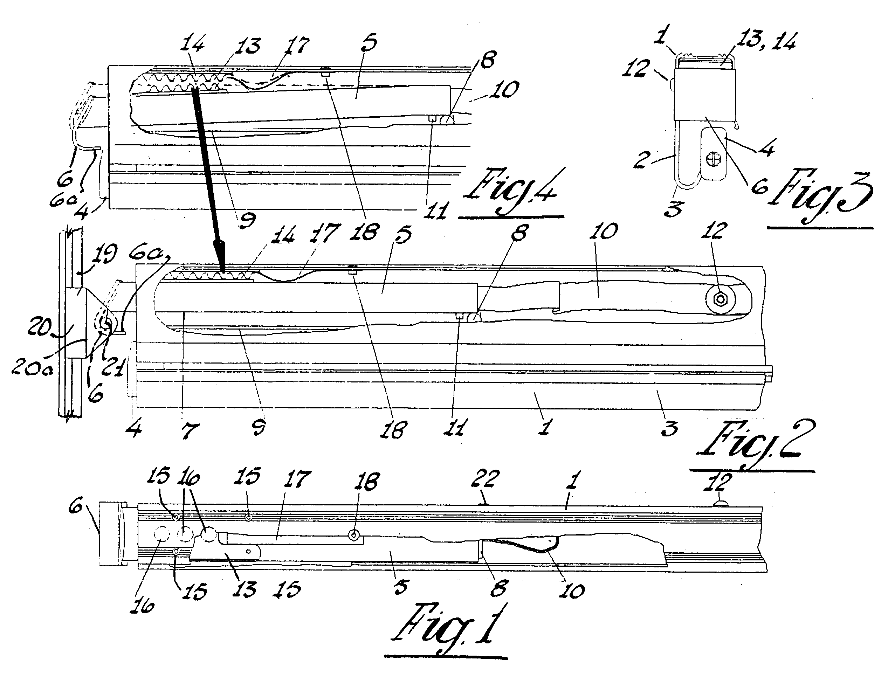

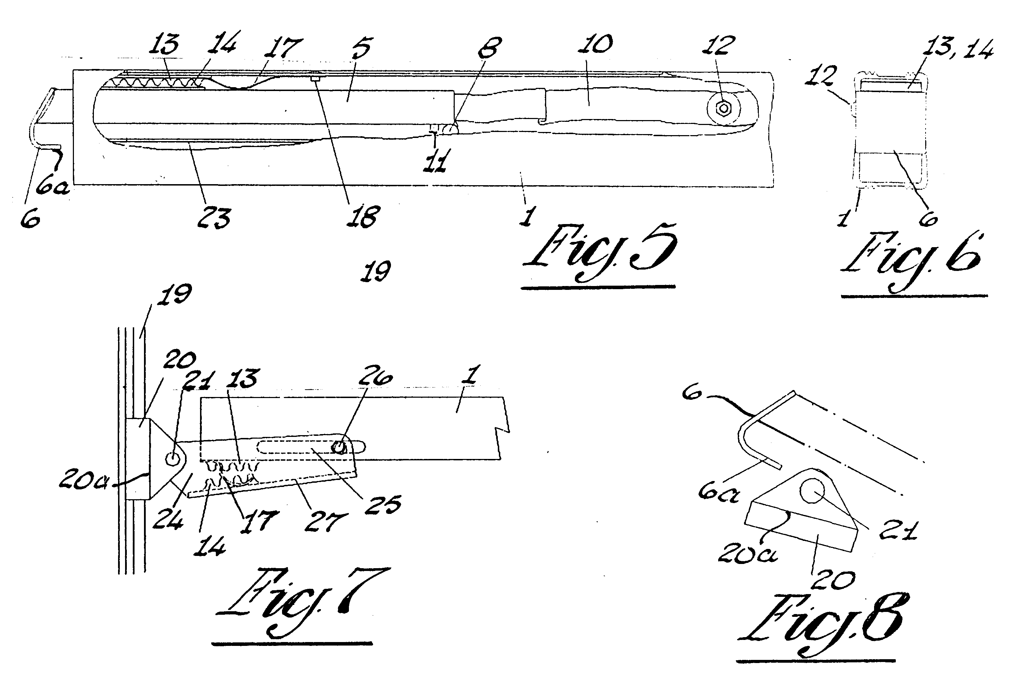

Referring now to figures 1 and 2, a beam 1 is formed by an extrusion process for example, and is of a length adapted to span the internal width of a vehicle. The beam is of box-section having a depending web 2 which is inturned to form a hook configuration 3 to serve as a rail along the length of the beam 1 from which garment hangers (not shown) can be suspended. At each end of the rail 3 there is provided an end stop 4.

An inner telescopic member 5 again of box cross-section is disposed within the beam 1, being of a smaller height than the beam 1 to give clearance from the top and bottom surfaces of the beam 1. The telescopic member 5 has a hooked plate 6 at an end which protrudes from the beam 1. The hooked plate 6 has a flat end lip 6a. At the opposite end of the telescopic member 5 on the bottom surface 7 thereof there is a fulcrum 8 formed from a length of round bar extending across the width of the telescopic member 5 and bearing against the interior bottom wall 9 of the beam 1. This arrangement allows the telescopic member 5 to pivot about the round bar fulcrum 8 within the beam 1. A webbing strap 10 is connected to the rear end of the telescopic member 5 adjacent the fulcrum 8 by means of a pin 11 which passes through the bottom wall 7 of the telescopic member 5. The other end of the webbing strap 10 is connected to a side wall of the beam 1 by means of a screw or rivet 12.

At the end nearest the hooked plate 6 moulded plastic locking plates 13,14 are attached to the interior upper wall of the beam 1 and the exterior upper wall of the telescopic member 5. Each locking plate 13,14 comprises a flat plate on which is defined a series of parallel rounded peaks and troughs each of which extends across the width of the plate 13,14. The locking plates 13,14 are designed to allow inter-engagement of a trough of one plate 13 with a peak of the other 14. Each locking plate 13,14 is attached to the respective wall by means of four rivets 15. In addition the mounting surface of each locking plate 13,14 has three spigots 16 which locate in corresponding apertures in the respective walls on which the plates 13,14 are mounted.

A leaf spring 17 is secured to the interior upper wall of the beam 1 by a rivet 18 and bears against the exterior upper wall of the telescopic member 5. In this manner the leaf spring 17 forces the telescopic member 5 to pivot about the fulcrum 8 to bias the locking plates 13,14 out of engagement.

Referring to figure 2, at or near each side wall of the vehicle (not shown) there is provided a vertical track 19 with apertures (not shown) formed along the length of the track 19. A sliding shoe 20 having a flat face 20a is captively located on each track 19 and is free to move in the vertical direction and to latch at any point on the track 19 by means of a releasable spring loaded tongue (not shown) which can locate into an aperture provided in the track 19. The shoe 20 carries a round bar 21 over which the hooked plate 6 of the telescopic member 5 can be located such that the lip 6a is positioned under the round bar 21. The sliding shoe 20 and track 19 arrangement, which is common to the art, allows the beam 1 to be moved up and down the vehicle interior to a desired position.

It is to be appreciated that the same configuration as described may exist at the other end of the beam.

As aforedescribed the beam 1 not only acts as a garment support rail but also provides a means for supporting a second deck whereby loads can be carried on the second deck above the garment rail beams.

When the beam 1 is unloaded i.e. it is not supporting a second deck and garments are not suspended from the rail, the leaf spring 17 bears against the telescopic member 5 such that the latter pivots about the fulcrum 8 within the beam 1 and hence disengages the locking plates 13,14. In this unloaded state the inner telescopic beam 5 is free to telescope. The outward movement of the telescopic member 5 is limited by the length of the webbing strap 10 and inward motion is limited by a rivet 22 in the wall of the beam 1 which the telescopic member 5 abuts. Thus the effective length of the beam 1 can be increased to allow the beam to be slid up or down the vertical track 19 within the vehicle on the shoe 20 provided to a predetermined latching position. The hooked plate 6 is free to pivot on the round bar 21 provided on the shoe 20. This pivoting action combined with the telescoping arrangement allows one end of the beam 1 to be raised at a time.

The proximity of the flat face 20a on the shoe 20 to the formed lip 6a projecting from the hooked plate 6 prevents the cargo beam assembly from becoming detached from the shoe 20 while the shoe 20 remains in the captive position on the track 19. Thus in normal operation the cargo beam assembly remains fully captive on the track via the sliding shoes 20 at either end.

However, if the beam is moved to an open end of the track 19 or to a position where there is a purposely designed gap in the track 19 the shoe 20 may be removed from the track 19. The beam assembly 15 may then be removed from the shoe 20 by rotating the shoe 20 through a suitable angle (as shown in figure 8) such that the hooked plate 6 does not abut the surface 20a of the shoe 20. In this manner the shoe 20 can be removed from the respective track 19 enabling removal of the cargo support beam assembly and re-fitting of an alternative cargo support beam. This design permits simple removal and attachment of a cargo support beam assembly obviating the need for tools and for each beam to incorporate its own shoes 20 whilst still providing for a fully captive beam assembly during use.

As security against unauthorised persons removing the beam a lock (not shown) may be fitted to each section of the vertical track 19 to prevent the sliding shoe 20 from being moved to the point on the track 19 which allows the shoe 20 to be removed. The lock may be a bolt or cap-screw fitted into a tapped hole in the vertical track so forming a simple stop or may be a conventional key operated lock. Once the beam has been moved to the desired height within the vehicle cargo can be loaded. Application of cargo load whether by suspension of garments from the rail or by the use of a second deck or both, compresses the leaf spring 17 allowing the locking plates 13,14 to engage as aforedescribed. Once the locking plates 13,14 are engaged the telescopic action is prevented. Side loads applied to the beam or either side wall can now be reacted by the action of the locking plates. The locking plate spigots 16 located in the holes as aforedescribed resist the shear forces which occur when side loads are applied.

Figures 5 and 6 show an alternative embodiment of the beam which has no garment support rail. This type of beam is used as a support for a second deck and differs only in that the box section is of greater height than in the previous embodiment and in that an additional horizontal web 23 parallel to the top and bottom walls of the beam supports the telescopic member 5 and fulcrum 8. An alternative embodiment of the present invention is shown in figure 7 . In this embodiment a cradle 24 is connected to the shoe 20 either in a permanent fashion by means of a pin 21 etc. (as shown) or by means of a hook attachment as aforedescribed. The longitudinal axis of the cradle 24 is substantially perpendicular to the vertical track 19. The rotational movement of the cradle 24 about the pin 21 is restricted by means of a stop (not shown) such that the cradle 24 cannot pivot downwardly about the pin 21. The cradle 24 is substantially of open topped box section and is designed to receive an end of the beam 1. The end of the beam 1 has a slot 25 along part of its axial length on one or both of the side walls. A pin or spigot 26 is attached to one or both side walls of the cradle 24 and is designed to be received in the slot 25 provided in the beam 1 as described. Locking plates 13,14 as aforedescribed are provided on the exterior lower wall of the beam and the interior lower wall 27 of the cradle 24. As aforedescribed a leaf spring 17 is connected to the external lower wall of the beam 1 to bias the plates 13,14 out of engagement. The arrangement as described allows a telescopic movement with the beam 1 able to move axially within the cradle 24 by virtue of the slot or slots 25 sliding over the pin or pins 26 on the cradle 24. The pin 26 also acts as a fulcrum point to allow tilting of the beam about that point.

Thus the present invention provides for a simple and inexpensive means for automatically locking the telescopic action such that when the beam is supporting a load its tensile and compressive integrity is retained under applied side loads. However, once the beam is unloaded the telescopic action becomes operable and the beam can be vertically displaced in a simple manner as aforedescribed.

The locking plates as described have the added advantage that they allow for any variation in the effective length of the beam as a result of the side walls of the beam not being parallel to one another. It is to be appreciated that the present invention is not restricted to the embodiment of the locking plates as described. The ridges and troughs as described could be formed directly in the beam and the telescopic member or the cradle by means such as press forming, moulding or machining. Alternatively the locking elements may comprise a series of apertures formed in one member into which a spigot or pin attached to the co-operating member engages. When the pin is aligned with the aperture in the corresponding member and a load is applied the pin would be forced into engagement with the aperture.

In an alternative embodiment one of the locking plates as aforedescribed may be retractable against a biasing force (e.g. a spring) into a recess provided in the supporting member when the locking plates are not properly engaged. This would prevent too high a load being applied to the peaks of the locking elements.

It is to be appreciated that the inclusion of the leaf spring to bias the locking plates into separation is not essential to the invention. The system as described can work satisfactorily without the spring. Furthermore it is to be appreciated that the leaf spring may be replaced by other forms of biasing means for example a coil spring, a torsional hair spring (positioned around the fulcrum) or an elastomeric block.

In other embodiments the positions of the fulcrum and the locking plates may be reversed, or the fulcrum may be replaced by a second set of locking plates and a spring arrangement to ensure the correct tilting movement of the beam.

## Claims

1. An elongate cargo support beam for use in conjunction with a guide track (19), the beam comprising a first member (1) and a second member (5), said second member (5) being axially moveable relative to said first member (1) to provide a telescopic action, the second member (5) being moveable relative to said first member (1) in a substantially vertical direction between a first position in which the first (1) and second members (5) are engaged to prevent said telescopic action and a second position in which said first (1) and second members (5) are disengaged to permit said telescopic action, characterized in that there is provided at an end of the second member (5) a connector (6) adapted for connection to a sliding shoe (20) captively engaged to the guide track (19) whereby movement of said beam along the track (19) causes the beam to move telescopically automatically.

2. A cargo support beam according to any preceding claim, wherein biasing means (17) are provided to bias said first (1) and second members (5) into said second position.

3. A cargo support beam according to claim 2, wherein the biasing means (17) is overcome when said beam is loaded thereby moving said members (1, 5) into said first position.

4. A cargo support beam according to any preceding claim, wherein said first member (1) is of a hollow configuration.

5. A cargo support beam according to claim 4, wherein said second member (5) is received in said hollow first member (1).

6. A cargo support beam according to any preceding claim, wherein said second member (5) is pivotable about one end within said first member (1).

7. A cargo support beam according to any preceding claim, wherein said first (1) and second members (5) have inter-engageable locking plates (13, 14), each locking plate (13, 14) being substantially planar with a surface having a corrugated or toothed configuration defining a series of peaks and troughs which engage with the peaks and troughs on the other locking plate (13, 14).

8. A cargo support beam according to claim 7, wherein said locking plates (13, 14) have protruding elements (16) which locate into apertures provided in their respective members (1,5) on which they are mounted.

9. A cargo support beam according to claim 8, wherein said protruding elements (16) are designed to withstand shear forces applied axially to the beam (1).

10. A cargo support beam according to claims 1 to 6, wherein the first (1) and second members (5) are engaged by a pin on one of the members which engages in one of a series of apertures defined in the other member.

11. A cargo support beam according to claim 10, wherein said pin is biased into engagement with said aperture.

12. A cargo support beam according to any preceding claim, wherein said second member is connected to said first member by means of a webbing strap (10) to limit the telescopic action of the second member (5) out from the first member (1).

13. A cargo support beam according to any preceding claim, wherein a limit stop (22) is provided to limit the telescopic action of the second member (5) into the first member (1).

14. A cargo support beam according to claim 1, 2 or 3, wherein said second member (5) is of a cradle (24) configuration in which an end of said first member (1) is seated.

15. A cargo support beam according to claim 14, wherein said first member (1) has a slot (25) provided therein in which a pin (26) defined in said cradle (24) is received such that axial movement of said pin (26) relative to said slot (25) provides for said telescopic action and said pivotal motion.

16. A cargo support beam according to any preceding claim, characterised in that said beam has a hooked member (6, 6a) which is adapted to abut at least part of said shoe (20) when removal is attempted with the shoe (20) fitted to the track (19) and which is adapted to allow removal of the beam when the shoe (20) is separated from the track (19) and rotated through a suitable angle.

17. A cargo support beam according to claim 16 wherein the hooked member (6) abuts a face (20a) of said shoe (20) when the beam is moved axially to attempt to separate the beam from the shoe (20).

## Patentansprüche

1. Länglicher Ladungsstützbalken zur Verwendung in Verbindung mit einer Leitbahn (19), wobei der Balken ein erstes Glied (1) und ein zweites Glied (5) umfaßt, wobei zur Bereitstellung einer Teleskopwirkung das zweite Glied (5) relativ zum ersten Glied (1) axial beweglich ist, wobei das zweite Glied (5) relativ zum ersten Glied (1) in einer im wesentlichen vertikalen Richtung beweglich ist, und zwar zwischen einer ersten Stellung, bei der das erste (1) und das zweite (5) Glied zur Verhinderung dieser Teleskopwirkung miteinander in Eingriff stehen, und einer zweiten Stellung, bei der sich das erste (1) und das zweite (5) Glied zur Ermöglichung dieser Teleskopwirkung außer Eingriff befinden, dadurch gekennzeichnet, daß an einem Ende des zweiten Glieds (5) ein Verbindungsstück (6) vorgesehen ist, das zur Verbindung mit einem unverlierbar mit der Leitbahn (19) in Eingriff stehenden Gleitschuh (20) ausgelegt ist, wodurch eine Bewegung des Balkens entlang der Bahn (19) eine automatische Teleskopbewegung des Balkens verursacht.

2. Ladungsstützbalken nach einem der vorhergehenden Ansprüche, bei dem Vorspannmittel (17) zum Vorspannen des ersten (1) und des zweiten (5) Glieds in die zweite Stellung vorgesehen sind.

3. Ladungsstützbalken nach Anspruch 2, bei dem die Vorspannmittel (17) bei einer Belastung des Balkens außer Kraft gesetzt werden, wodurch die Glieder (1, 5) in die erste Stellung bewegt werden.

4. Ladungsstützbalken nach einem der vorhergehenden Ansprüche, bei dem das erste Glied (1) eine Hohlform aufweist.

5. Ladungsstützbalken nach Anspruch 4, bei dem das zweite Glied (5) im hohlen ersten Glied (1) aufgenommen wird.

6. Ladungsstützbalken nach einem der vorhergehenden Ansprüche, bei dem das zweite Glied (5) um ein Ende innerhalb des ersten Glieds (1) schwenkbar ist.

7. Ladungsstützbalken nach einem der vorhergehenden Ansprüche, bei dem das erste (1) und das zweite (5) Glied ineinander eingreifbare Sicherungsplatten (13, 14) aufweisen, wobei jede Sicherungsplatte (13, 14) im wesentlichen eben ist und eine Fläche aufweist, die eine gewellte oder gezahnte Form aufweist, welche eine Reihe von Spitzen und Tälern bezeichnet, die in die an der anderen Sicherungsplatte (13, 14) befindlichen Spitzen und Täler eingreifen.

8. Ladungsstützbalken nach Anspruch 7, bei dem die Sicherungsplatten (13, 14) vorstehende Elemente (16) aufweisen, die in an ihren jeweiligen Gliedern (1, 5), an denen sie angebracht sind, vorhandene Öffnungen passen.

9. Ladungsstützbalken nach Anspruch 8, bei dem die vorstehenden Elemente (16) zum Widerstand gegen axial auf den Balken (1) ausgeübte Scherkräfte ausgelegt sind.

10. Ladungsstützbalken nach den Ansprüchen 1 bis 6, bei dem das erste (1) und das zweite (5) Glied durch einen Bolzen an einem der Glieder miteinander in Eingriff stehen, welcher in eine aus einer Reihe von im anderen Glied geformten Öffnungen eingreift.

11. Ladungsstützbalken nach Anspruch 10, bei dem der Bolzen in den Eingriff mit der Öffnung vorgespannt wird.

12. Ladungsstützbalken nach einem der vorhergehenden Ansprüche, bei dem das zweite Glied mittels eines Gurtbands (10) mit dem ersten Glied verbunden ist, um die Teleskopwirkung des zweiten Glieds (5) aus dem ersten Glied (1) hinaus zu begrenzen.

13. Ladungsstützbalken nach einem der vorhergehenden Ansprüche, bei dem ein Endanschlag (22) zur Begrenzung der Teleskopwirkung des zweiten Glieds (5) in das erste Glied (1) hinein vorgesehen ist.

14. Ladungsstützbalken nach Anspruch 1, 2 oder 3, bei dem das zweite Glied (5) eine Schlittenform (24) aufweist, in der ein Ende des ersten Glieds (1) sitzt.

15. Ladungsstützbalken nach Anspruch 14, bei dem das erste Glied (1) einen Schlitz (25) aufweist, in dem ein im Schlitten (24) geformter Bolzen (26) so aufgenommen wird, daß eine Axialbewegung des Bolzens (26) relativ zum Schlitz (25) die Teleskopwirkung und die Schwenkbewegung bereitstellt.

16. Ladungsstützbalken nach einem der vorhergehenden Ansprüche, dadurch gekennzeichnet, daß der Balken ein Hakenglied (6, 6a) aufweist, welches zum Anliegen an mindestens einem Teil des Schuhs (20) ausgelegt ist, wenn der Versuch eines Entfernens mit dem in die Bahn (19) eingepaßten Schuh gemacht wird, und welches so ausgelegt ist, daß es das Entfernen des Balkens ermöglicht, wenn der Schuh (20) von der Bahn (19) getrennt ist und durch einen geeigneten Winkel gedreht wird.

17. Ladungsstützbalken nach Anspruch 16, bei dem das Hakenglied (6) an einer Stirnfläche (20a) des Schuhs (20) anliegt, wenn der Balken bei dem Versuch, den Balken vom Schuh (20) zu trennen, axial bewegt wird.

## Revendications

1. Poutrelle allongée pour le support de marchandises pour emploi conjointement avec une piste de guidage (19), la poutrelle comprenant un premier membre (1) et un second membre (5), ledit second membre (5) étant axialement mobile par rapport audit premier membre (1) pour prévoir une action téléscopique, le second membre (5) étant mobile par rapport audit premier membre (1) dans une direction sensiblement verticale entre une première position dans laquelle le premier membre (1) et le second membre (5) sont engagés pour empêcher ladite action téléscopique et une seconde position dans laquelle ledit premier membre (1) et ledit second membre (5) sont hors d'engagement pour permettre ladite action téléscopique, caractérisée en ce que l'on prévoit à une extrémité du second membre (5) un dispositif connecteur (6) adapté pour effectuer la connexion avec un patin coulissant (20) engagé de manière captive sur la piste de guidage (19) grâce à quoi le déplacement de ladite poutrelle le long de la piste (19) provoque de manière automatique le déplacement téléscopique de la poutrelle.

2. Poutrelle pour le support de marchandises selon une revendication précédente quelconque, dans laquelle des moyens de précharge (17) sont prévus pour précharger ledit premier membre (1) et ledit second membre (5) en ladite seconde position.

3. Poutrelle pour le support de marchandises selon la revendication 2, dans laquelle les moyens de précharge (17) sont neutralisés lorsque ladite poutrelle est chargée déplaçant ainsi lesdits membres (1, 5) en ladite première position.

4. Poutrelle pour le support de marchandises selon une revendication précédente quelconque, dans laquelle ledit premier membre (1) est de configuration creuse.

5. Poutrelle pour le support de marchandises selon la revendication 4, dans laquelle ledit second membre (5) est reçu dans ledit premier membre creux (1).

6. Poutrelle pour le support de marchandises selon une revendication précédente quelconque, dans laquelle ledit second membre (5) est pivotable autour d'une extrémité à l'intérieur dudit premier membre (1).

7. Poutrelle pour le support de marchandises selon une revendication précédente quelconque, dans laquelle ledit premier membre (1) et ledit second membre (5) possèdent des plaques de bloquage capables d'engagement mutuel (13, 14), chaque plaque de bloquage (13, 14) étant sensiblement plane ayant une surface présentant une configuration ondulée ou dentelée définissant une série de sommets et de creux qui s'engagent avec les sommets et creux situés sur l'autre plaque de bloquage (13, 14).

8. Poutrelle pour le support de marchandises selon la revendication 7, dans laquelle lesdites plaques de bloquage (13, 14) possèdent des éléments (16) faisant saillie qui se logent dans des ouvertures ménagées dans leur membre respectif (1, 5) sur lequel elles sont montées.

9. Poutrelle pour le support de marchandises selon la revendication 8, dans laquelle lesdits éléments (16) faisant saillie sont conçus pour supporter des efforts de cisaillement appliqués axialement par rapport à la poutrelle (1).

10. Poutrelle pour le support de marchandises selon les revendications 1 à 6, dans laquelle le premier membre (1) et le second membre (5) sont engagés par une goupille située sur l'un des membres qui s'engage dans l'une parmi une série d'ouvertures définies dans l'autre membre.

11. Poutrelle pour le support de marchandise selon la revendication 10, dans laquelle ladite goupille est préchargée en un engagement avec ladite ouverture.

12. Poutrelle pour le support de marchandises selon une revendication précédente quelconque, dans laquelle ledit second membre est raccordé audit premier membre au moyen d'une courroie sangle (10) pour limiter l'action télescopique du second membre (5) hors du premier membre (1).

13. Poutrelle pour le support de marchandises selon une revendication précédente quelconque, dans laquelle une butée de fin de course (22) est prévue pour limiter l'action télescopique du second membre (5) en pénétration du premier membre (1).

14. Poutrelle pour le support de marchandises selon la revendication 1, 2 ou 3, dans laquelle ledit second membre (5) est de configuration en glissoir (24) dans lequel est calée une extrémité dudit premier membre (1).

15. Poutrelle pour le support de marchandises selon la revendication 14, dans laquelle ledit premier membre (1) possède une fente (25) ménagée dans celui-ci dans laquelle est reçue une goupille (26) définie dans ledit glissoir (24) de telle sorte que le déplacement axial de ladite goupille (26) par rapport à ladite fente (25) effectue ladite action télescopique et ledit mouvement de pivotement.

16. Poutrelle pour le support de marchandises selon une revendication précédente quelconque, caractérisée en ce que ladite poutrelle possède un membre de crochet (6, 6a) qui est adapté pour buter au moins contre une partie dudit patin (20) lorsque l'on tente un enlèvement le patin (2) étant logé dans la piste (19) et qui est adapté pour permettre l'enlèvement de la poutrelle lorsque le patin (20) est séparé de la piste (19) et a effectué une rotation d'angle approprié.

17. Poutrelle pour le support de marchandises selon la revendication 16, dans laquelle le membre de crochet (6) bute contre une face (20a) dudit patin (20) lorsque l'on déplace la poutrelle axialement pour tenter de séparer la poutrelle du patin (20).
